# EUROPEAN PATENT SPECIFICATION

(11) **EP 2 949 508 B1**
(45) Date of publication and mention of the grant of the patent: **13.11.2019**
(21) Application number: 15169829.7
(22) Date of filing: 29.05.2015
(51) Int. Cl.: B60P 7/08

(54) **MOUNTING MEMBER**
MONTAGEELEMENT
ÉLÉMENT DE MONTAGE

(30) Priority: 01.06.2014 DK 201400292
(43) Date of publication of application: 02.12.2015
(73) Proprietor: Larsen, Jan, 8230 Abyhoj (DK)
(72) Inventor: Larsen, Jan, 8230 Abyhoj (DK)
(74) Representative: Rottenberg, Annabell Simone

(56) References cited:
- EP-A1- 2 607 174
- US-A- 5 452 973
- US-A1- 2011 243 681
- US-A1- 2013 323 004
- US-B1- 6 209 768

## Description

### Field of invention

The present invention relates to a mounting member for facilitating transport of material e.g. by means of e.g. a trailer. More particularly, the present invention relates to a mounting member that allows for safe transport of material and a fast way of emptying a trailer when the mounting member is applied on a trailer.

### Prior art

Trailers are used to transport various elements such as building materials, broken bricks, gypsum boards, storage boxes, furniture, sand, firewood, wood chips and garden waste.

Document 2013/0323004 A1 is considered to be the prior art closest to the subject-matter of the independent claim 1.

US 2011/0243681 A1 relates to a vehicle bed cover and attachment system comprising a fabric element, a load tie-down/pull strap and a main panel attachment system. The vehicle bed cover has the following properties: it is attached to the vehicle, it functions as extended tailgate, and it is adapted to cover loads of variable height. The vehicle bed cover fits the trunk and follows its contours and is further anchored to the vehicle by cords/straps.

When e.g. garden waste is transported using a trailer, it is time-consuming to secure the garden waste to the trailer in such a manner that the garden waste cannot fall off the trailer during transport. Moreover, it is often very time-consuming to empty materials such as garden waste and gypsum board waste from a trailer, when the trailer has arrived at the destination, at which it has to be emptied.

When sand or waste has been removed from a trailer, sweeping or additional cleaning is normally required.

Therefore, it is desirable to provide a solution that makes it possible to transport items like garden waste in a safe manner in which no items fall off the trailer during transportation.

It is further desirable to provide a solution that allows emptying a trailer in a fast and easy way. It is further desirable to provide a solution that reduces or eliminates the need for cleaning (e.g. sweeping) a trailer once it has been emptied.

### Object of the invention

It is the object of the present invention to provide a way of safely transporting building materials, rubble (broken bricks), gypsum boards, storage boxes, furniture, sand, firewood, wood chips and garden waste in a manner in which no items fall off during transportation. It is also an object of the present invention to provide a way of emptying a trailer in a fast and easy way.

It is further an object of the present invention to provide a solution that reduces or eliminates the need for cleaning (e.g. sweeping) a trailer once it has been emptied.

### Summary of the invention

The object of the present invention is achieved by a mounting member with the features as defined in claim 1. Preferred embodiments are defined in the dependent subclaims, explained in the following description and illustrated in the accompanying drawings.

The mounting member according to the invention is a mounting member preferably for trailers and other objects that are configured to store and transport items, which mounting member comprises a tarpaulin manufactured in a material making it possible to completely or partly enclose a number of items placed on the tarpaulin. The mounting member comprises means for attachment of a number of first assembly structures and a number of other assembly structures, wherein the first assembly structures comprise means for detachably attachment to the other assembly structures.

By applying the mounting member according to the invention, it is possible to provide a way of safely transporting building materials, rubble (broken bricks), gypsum boards, storage boxes, furniture, sand, firewood, wood chips and garden waste.

The mounting member according to the invention prevents items from falling off the trailer during transportation.

Since the mounting member according to the invention encloses the items (e.g. garden waste), the need for cleaning the trailer (or another means for transportation) once it has been emptied is reduced or eliminated.

The mounting member according to the invention is a mounting member preferably for trailers. However, it may also be applied to transport and store items (e.g. garden waste) by using e.g. a pickup truck or a lorry.

The mounting member comprises a tarpaulin (tarp) manufactured in a material making it possible to completely or partly enclose a number of items placed on the tarpaulin. The material has to be so flexible that it can be bent and change form in order to fit the shape of the items placed on the tarpaulin. The material may, for example be polypropylene, polyester, nylon, rubber, linen, polyethylene or another suitable material.

It may be an advantage to apply a perforated tarpaulin allowing water to permeate through its structure when it encloses a load (e.g. garden waste). It may be an advantage to apply a woven or braided material provided with apertures, e.g. a braided or woven thread of polypropylene.

The mounting member comprises means for attachment of a number of first assembly structures and a number of other assembly structures, wherein the first assembly structures comprise means for detachable attachment to the other assembly structures. The means for detachable attachment may be stitching, gluing, pop rivets or mechanical attachment for example by means of a ring and a structure attached to the ring or a snap-lock.

It may be beneficial that the number of first assembly structures corresponds to the number of other assembly structures.

It may be an advantage that the mounting member comprises three or more first assembly structures and a corresponding number of other assembly structures.

The assembly structures can preferably constitute a mechanical connection between different parts/areas of the tarpaulin when they have been attached to corresponding assembly structures.

It is beneficial that the first assembly structures and the corresponding other assembly structures extend basically across (the length of) the trailer once the mounting member is mounted on the trailer.

Hereby, a very stable and safe positioning and configuration of the mounting member is achieved.

In one embodiment according to the invention, the mounting member comprises at least one additional first assembly structure and at least one additional second assembly structure, wherein these additional assembly structures comprise means for attaching the at least additional first assembly structure to the at least one additional second assembly structure, wherein the additional assembly structures extend basically perpendicular to the first assembly structures and the other assembly structures, when the assembly structures are attached to each other.

Hereby, it is possible to secure the mounting member even further by means of the additional assembly structures. Since the additional assembly structures extend basically perpendicular to the first assembly structures and the other assembly structures, a particular appropriate structure stabilising the mounting member in several independent directions is achieved.

It may be an advantage that the additional assembly structures are longer than the first assembly structures and the other assembly structures.

It may be an advantage that the at least one additional second assembly structure has such a length and is attached to the tarpaulin in a position that makes it possible to empty the mounting member by pulling the additional second assembly structure.

Hereby, it is possible to achieve quick and easy emptying of e.g. a trailer in which the mounting member is placed.

It may be an advantage that the mounting member comprises at least three first assembly structures and at least three other assembly structures, and that the assembly structures are configured to extend basically perpendicular to the longitudinal axis of a trailer, when the mounting member is arranged in a trailer. By applying at least three first assembly structures and at least three other assembly structures, one achieves a solution that secures that the items at least partly enclosed by the tarpaulin are kept in place by the mounting member in an expedient manner in which the items are prevented from falling off.

Application of assembly structures configured to extend basically perpendicular to the longitudinal axis of a trailer, when the mounting member is arranged in a trailer, makes it easy to use the mounting member, including closing it and securing it by means of the assembly structures.

It may be advantageous that the mounting member comprises mounting straps for attachment to a transport object (means of transportation).

Hereby, it is possible to provide safe attachment of the mounting member to a transport object (e.g. a trailer).

It may be an advantage that the tarpaulin and the assembly structures and/or the mounting straps comprise means for detachable attachment of the assembly structures and/or the mounting straps on the tarpaulin.

Hereby, it is possible to vary the number of assembly structures and mounting straps. It is also possible to vary the position of the assembly structures and the mounting straps. A flexible solution is hereby achieved. Further, it is possible to replace single parts instead of replacing the whole mounting member in case of wear and tear.

All suitable types of means for detachable attachment, including click locks, rings and snap hooks (carabiners) can be applied.

It may be beneficial that the assembly structures and/or the mounting straps comprise one or more extension members configured to be detachably attached to one or more of the assembly structures and/or the mounting straps. Hereby, it is possible to extend the assembly structures and/or the mounting straps. Accordingly, the length of the assembly structures and/or the mounting strap can be varied. In this way, a flexible mounting member that can be adjusted according to the specific application in which it has to be used is achieved. It is possible to apply a click lock for providing the detachable attachment.

It may be an advantage that one or more of the assembly structures and/or the mounting straps comprise a length adjustment member for length adjustment and/or tensioning of the assembly structures and/or the mounting straps.

Hereby, it is possible to provide length adjustment and/or tensioning of the assembly structures and/or the mounting straps so that the mounting member can be tensioned before it is transported in e.g. a trailer. This feature is essential if the items in different areas of a trailer have different volumes (e.g. small boxes arranged in the front section of the trailer and larger boxes arranged in the rear section of the trailer).

It may be advantageous that the means for attachment of a number of first assembly structures and a number of other assembly structures to the tarpaulin are provided in a distance from the periphery of the mounting member, wherein this distance is preferably larger than 10 cm, wherein it is preferred that the distance is larger than 20 cm.

Hereby, it is possible to reduce the size of the area (if any), in which the tarpaulin does not enclose items, so that the risk of items inadvertently falling off the mounting member (and thus the trailer) during transport in a trailer can be reduced.

It may be an advantage that the tarpaulin is water-permeable. By having a mounting member comprising a perforated tarpaulin, the tarpaulin will allow water to permeate through its structure. The tarpaulin may comprise one or more sections with apertures or a net.

The tarpaulin may preferably be manufactured in a material comprising apertures or perforations (e.g. a woven or braided material or a net).
The tarpaulin and/or the assembly structures and/or the mounting straps may comprise areas/sections made in an elastic material such as an elastic or a rubber material.

Hereby, it is possible to pull tight (tension) the mounting member enclosing items (e.g. building materials, rubble (broken bricks), gypsum boards, storage boxes, furniture, sand, firewood, wood chips and garden waste) and at the same time provide a permanent, inwardly directed force that can keep the items in place.

The assembly structures and/or the mounting straps may be provided as straps, rope, webbing, chains and wires or as other suitable structures.

It is preferred that the tarpaulin is larger than the trailer and fitted to the dimensions (shape including length, width and height) of the trailer.

A long trailer would require a long tarpaulin. It may be an advantage to apply an oval tarpaulin if the length of the trailer exceeds the width of the trailer.

The tarpaulin may be circular or oval; however, it may have any other suitable geometric shape.

### Description of the Drawings

The invention will become more fully understood from the detailed description given herein below. In the accompanying drawings:

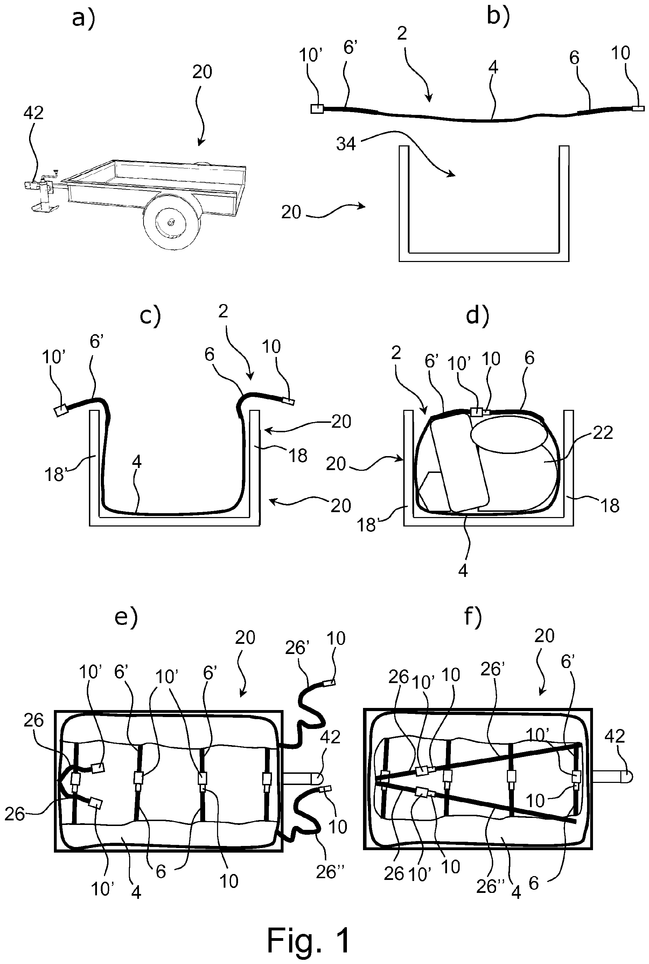

- Fig. 1 a): shows a schematic illustration of an unloaded trailer;
- Fig. 1 b): shows a schematic illustration of a mounting member according to the invention arranged above a trailer;
- Fig. 1 c): shows a schematic illustration of the mounting member shown in Fig. 1 b) arranged in a trailer;
- Fig. 1 d): shows a schematic illustration of the mounting member enclosing waste placed in a trailer;
- Fig. 1 e): shows a schematic illustration of a mounting member according to the invention see from above;
- Fig. 1 f): shows another schematic illustration of a mounting member according to the invention see from above;
- Fig. 2 a): shows a schematic illustration of a mounting member according to the invention arranged in a trailer;

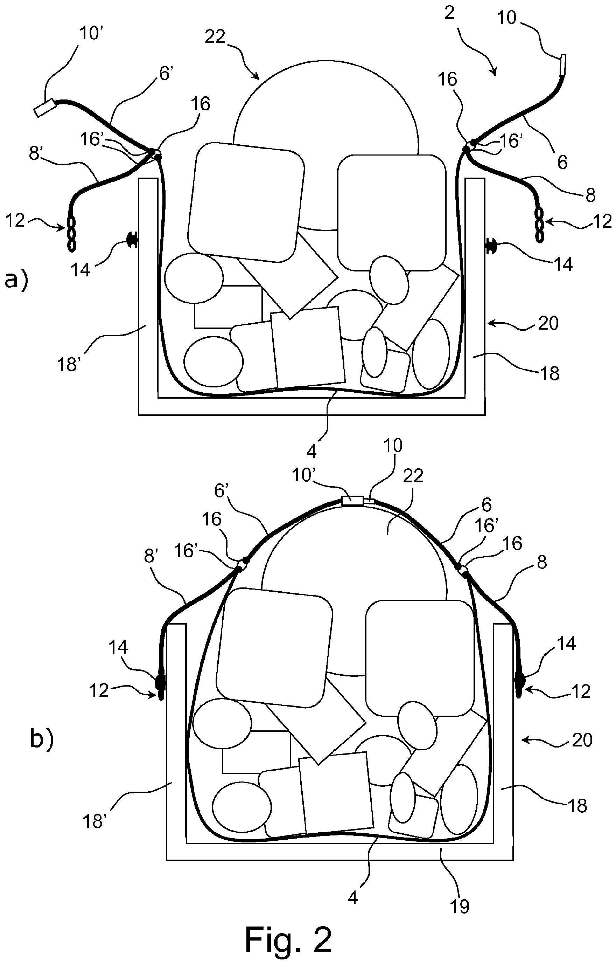

- Fig. 2 b): shows a schematic illustration of the mounting member shown in Fig. 2 a) in a closed configuration;

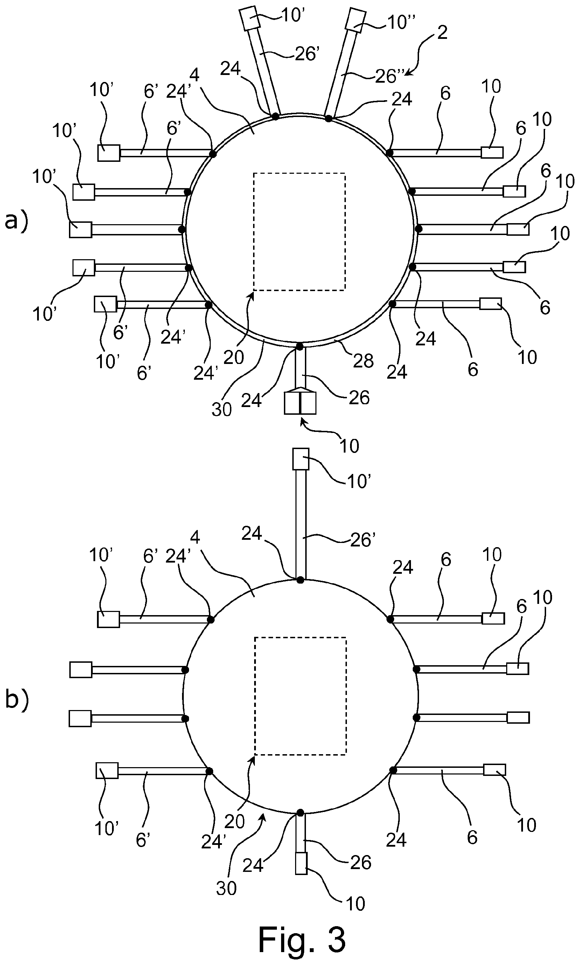

- Fig. 3 a): shows a schematic illustration of a mounting member according to the invention seen from above;
- Fig. 3 b): shows another mounting member according to the invention seen from above;

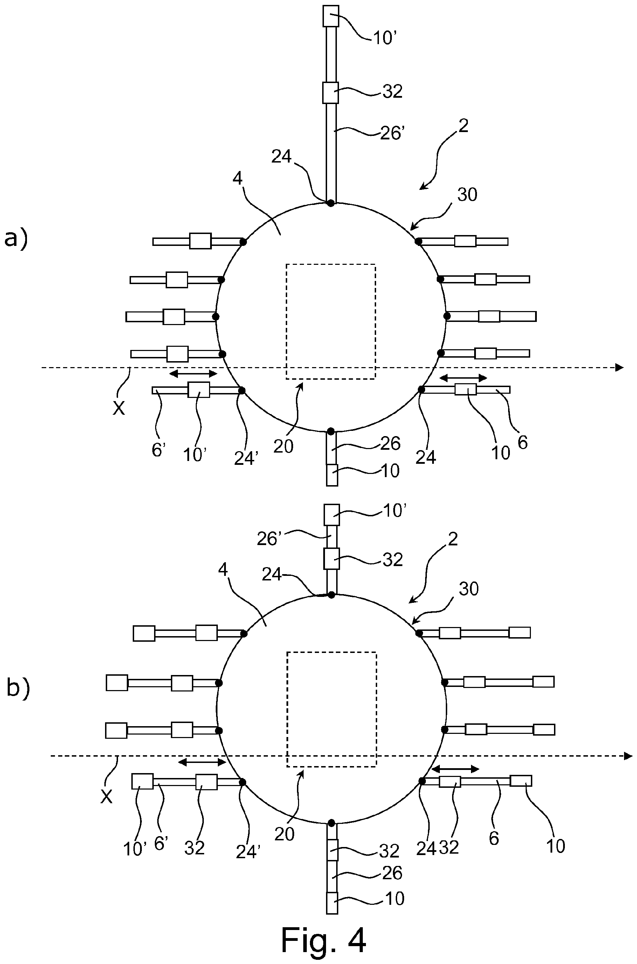

- Fig. 4 a): shows a mounting member according to the invention seen from above;
- Fig. 4 b): shows another mounting member according to the invention seen from above;

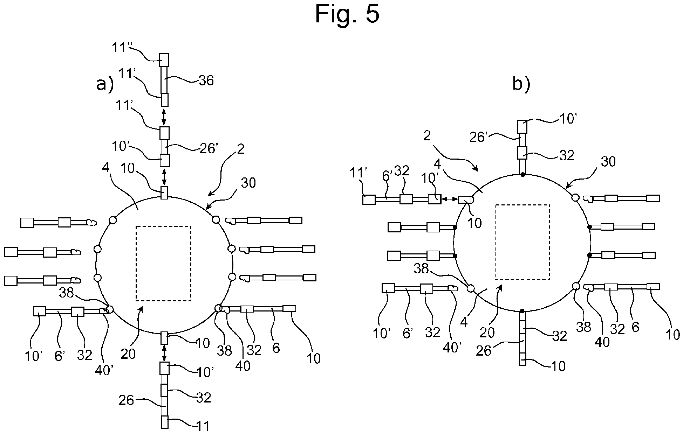

- Fig. 5 a): shows a mounting member according to the invention seen from above;
- Fig. 5 b): shows another mounting member according to the invention seen from above;

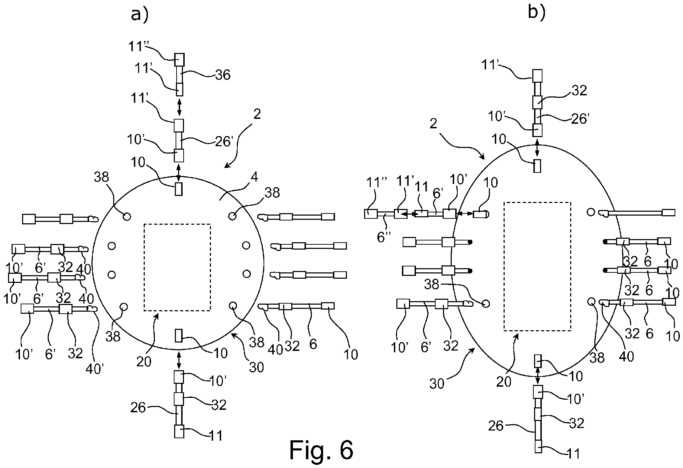

- Fig. 6 a): shows a mounting member according to the invention seen from above;
- Fig. 6 b): shows another mounting member according to the invention seen from above;

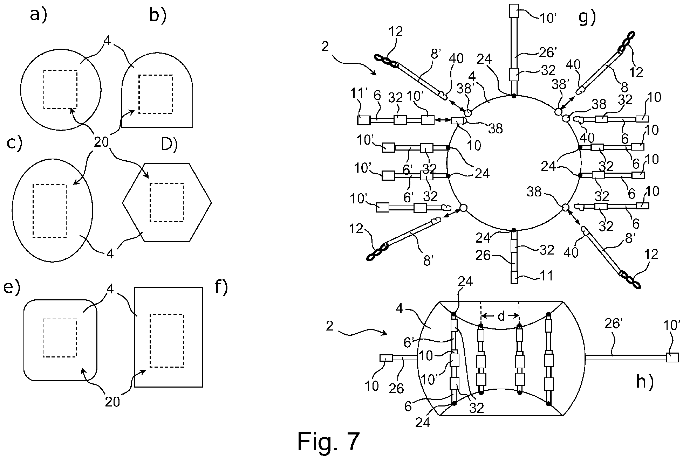

- Fig. 7 a)-f): shows schematic illustrations of different embodiments of the tarpaulin according to the invention;
- Fig. 7 g): shows a mounting member according to the invention seen from above;
- Fig. 7 h): shows another mounting member according to the invention, in a closed configuration, seen from above;

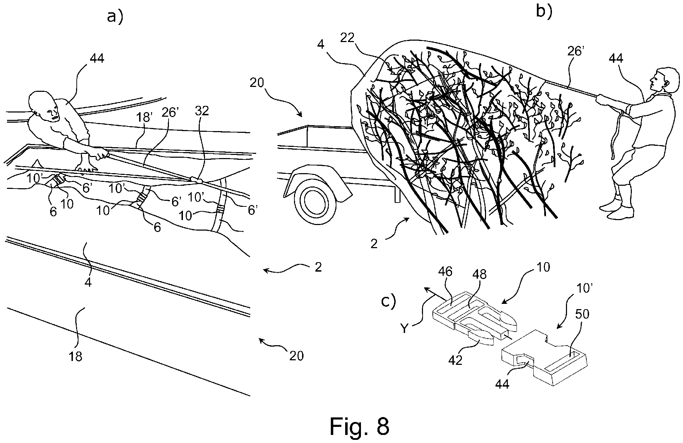

- Fig. 8 a): shows how a mounting member according to the invention is pulled tight by means of a transversal assembly structure (a strap);
- Fig. 8 b): shows how a mounting member according to the invention is being emptied by means of a transversal assembly structure (a strap) and
- Fig. 8 c): shows two connection members according to the invention.

### Detailed description of the invention

It should be noted that the accompanying drawings are given by way of illustration only, and thus, they are not limitative of the present invention. In the following, similar or identical elements in different embodiments are referred to by the same reference number.

Fig. 1 a) shows a schematic illustration of an unloaded trailer 20. The trailer 20 comprises a ball coupling 42 adapted for coupling with a trailer hitch (not shown).

In Fig. 1 b), the trailer 20 is seen from the back (the wheels, mudguards and nose wheel are not shown). The trailer 20 comprises an opening 34, in which objects/items such as building materials, rubble (broken bricks), gypsum boards, storage boxes, furniture, sand, firewood, wood chips or garden waste can be placed. A mounting member 2 according to the invention is provided above the trailer 20.

The mounting member 2 comprises a tarpaulin 4 manufactured in a material so flexible that the tarpaulin 4 can be formed around items on the tarpaulin 4 placed in the trailer 20. The material can for example be polypropylene, polyester, nylon, rubber, linen or another suitable material. It may be advantageous to use a perforated tarpaulin 4 or a tarpaulin 4 provided with apertures so that water can permeate the tarpaulin 4 when the tarpaulin 4 encloses the items. It may be an advantage to apply a woven or braided material with apertures, such as braided or woven threads of polypropylene.

The mounting member 2 comprises a first assembly structure 6 attached to a first section of the periphery of the tarpaulin 4. The mounting member 2 also comprises another assembly structure 6' attached to another section of the periphery of the tarpaulin 4.

A first connection member 10 formed as a portion of a "click lock" (see Fig. 8 c) is attached to the distal end of the first assembly structure 6. Another connection member 10' formed as the corresponding portion of the "click lock" is attached to the distal end of the other assembly structure 6'.

Fig. 1 c) shows a schematic illustration of the trailer 20 shown in Fig. 1 b) in a configuration in which the tarpaulin 4 of the mounting member 2 extends along the sides (trailer walls) 18, 18' and the bottom portion 19 of the trailer 20. It can be seen that a large portion of the two assembly structures 6, 6' and the two connection members 10, 10' attached to the assembly structures 6, 6' are positioned "outside" the trailer walls 18, 18'.

In Fig. 1 d), a number of items 22 are enclosed by the mounting member 2 arranged in the trailer 20. The two connection members 10, 10' are attached to each other.

In Fig. 1 e), the configuration shown in Fig. 1 d) is seen from above (the item 22 shown in Fig. 1 d is, however, removed in order to provide a more clear illustration). It can be seen that the mounting member 2 comprises four first transversal assembly structures 6 and four other corresponding transversal assembly structures 6' that are fixed to the four first transversal assembly structures 6 by means of four first connection members 10, that are provided in the distal end of the four first transversal assembly structures 6 and attached to four corresponding connection members 10' provided in the distal end of the assembly structures 6'.

The assembly structures 6, 6' can be made of straps, rope, webbing, chains, wires, thick thread or other suitable structures allowing the mounting member 2 to be assembled by means of the assembly structures 6, 6'.

It can be seen that the mounting member 2 comprises two assembly structures 26', 26" that are configured to pull tight (tension) the mounting member 2.

In the distal end of each of the assembly structures 26', 26", connection members 10 are provided. The connection members 10 are configured to engage with corresponding connection members 10' attached to the distal end of the two assembly structures 26 that are provided in the part of the trailer 20 that is furthest from the ball coupling 42. The two assembly structures 26', 26" are provided in the part of the trailer 20 that is closest to the ball coupling 42.

In Fig. 1 f), the mounting member 2 shown in Fig. 1 e) has been pulled tight (tensioned) by attaching the connection members 10' attached to the distal end of the two assembly structures 26 to the corresponding connection members 10 attached to the distal end of the assembly structures 26', 26".

The mounting member 2 may preferably comprise tensioning structures (length adjustment members 32 shown in Fig. 8 b) for pulling tight (tensioning) the assembly structures 26, 26', 26". Such tensioning structures may be an integrated part of the connection members 10, 10'.

Fig. 2 a) shows a schematic illustration of a mounting member 2 according to the invention arranged in a trailer 20. The mounting member 2 comprises a tarpaulin 4 placed in the trailer 20 which extends along the bottom portion 19 and the sides (trailer walls) 18, 18' of the trailer 20.

Rings 16 are provided in the periphery of the tarpaulin 4. Attachment members 16' are attached to the rings 16 for attaching a first webbing 6, a second webbing 6', a first mounting strap 8 and a second mounting strap 8', respectively. The webbings 6, 6' may be replaced by straps, rope, chains or other suitable elements.

In the distal end of the first webbing 6, a first connection member 10 is attached. The connection member 10 corresponds to a first half of the click lock of the type shown in Fig. 8 c). In the distal end of the other webbing 6', another connection member 10' is attached. The other connection member 10' corresponds to the other half of the click lock.

A rubber ring is provided in the distal end of each of the two mounting straps 8, 8'. The rubber rings are configured to be attached to corresponding attachment members 14 attached to the outside portion of the side walls 18, 18' of the trailer 20.

The two webbings 6, 6' and the two mounting straps 8, 8' can preferably be detachably attached to the rings 16 so that they can easily be substituted or replaced.

A plurality of items 22 (e.g. waste) are arranged on the tarpaulin 4 in the trailer 20.

Fig. 2 b) shows a schematic illustration of the mounting member 2 shown in Fig. 2 a), in a closed configuration. The two connection members 10, 10' are brought into engagement with each other so that the tarpaulin 4 and the webbings 6, 6' enclose the items 22.

The two mounting straps 8, 8' are attached to the attachment members 14 on the trailer 20 in such a manner that the mounting member 2 is attached to the trailer 20.

Fig. 3 a) illustrates a schematic illustration of a mounting member 2 according to the invention seen from above. A subjacent trailer 20 is indicated with a dotted line. The mounting member 2 comprises a circular tarpaulin 4, in the periphery 30 of which, a reinforcement member 28 extending along the length of the periphery 30 is provided.

The reinforcement member 28 is formed as a webbing or a strap that can be attached to the tarpaulin 4 by means of stitching, gluing or mechanical attachment means such as pop rivets.

The mounting member 2 comprises five first assembly structures 6 formed as straps 6 that are attached to the periphery 30 by means of attachment members 24 (e.g. stitching, gluing or mechanical attachment means such as pop rivets). Connection members 10 are provided in the distal end of the straps 6.

The mounting member 2 comprises five other assembly structures 6' formed as straps 6' that are attached to the periphery 30 by means of attachment members 24. Connection members 10' configured to engage with the corresponding connection members 10 provided in the distal end of the straps 6 are provided in the distal end of the straps 6'.

The mounting member 2 further comprises a longitudinal (with respect to the longitudinal axis of the trailer) webbing 26 attached to the periphery 30 by means of an attachment member 24 that may be a stitching, gluing or mechanical attachment means such as pop rivets. In the distal end of the webbing 26, a double connection member 10 is arranged.

In the opposite end of the mounting member 2, two webbings 26', 26" attached to the periphery 30 by means of an attachment member 24 are provided. In the distal end of the two webbings 26', 26", connection members 10, 10' are attached. The connection members 10, 10' are configured to engage with the double connection member 10 attached to the webbing 26.

Fig. 3 b) illustrates another mounting member 2 according to the invention seen from above. Like in Fig. 3 a), a subjacent trailer 20 is indicated with a dotted line. The mounting member 2 comprises a circular tarpaulin 4 having a periphery 30.

The mounting member 2 comprises four first assembly structures 6 formed as straps 6 that are attached to the periphery 30 by means of attachment members 24. In the distal end of the straps 6, connection members 10 are provided.

The mounting member 2 comprises four other assembly structures 6' formed as straps 6' that are attached to the periphery 30 by means of attachment members 24. In the distal end of the straps 6, connection members 10' are provided. These connection members 10' are configured to engage with the corresponding connection members 10 attached to the distal end of the straps 6.

The mounting member 2 comprises (like the mounting member 2 shown in Fig. 3 a) a longitudinal webbing 26 attached to the periphery 30 by means of an attachment member 24. A connection member 10 is provided in the distal end of the webbing 26.

A webbing 26' is attached to the periphery 30 in the opposite end of the mounting member 2 by means of an attachment member 24. A connection member 10' is attached to the distal end of the webbing 26'. The connection member 10' is adapted to engage with the connection member 10 attached to the webbing 26.

The webbings 26, 26', 26" (shaped as straps) and the webbings 6, 6' may preferably be equipped with length adjustment members for adjusting the length and tension of the webbings 26, 26', 26" (shaped as straps) and the webbings 6, 6'. In this way, it is possible to ensure that the mounting member 2 encloses the items (enclosed by the mounting member 2) tightly.

By way of example, it is possible to pull (tension) the first end of the mounting member 2 tighter than the other end of the mounting member 2. This may be an advantage if the items in the first end of the trailer have a larger volume than the items in the opposite end of the trailer.

Fig. 4 a) illustrates a mounting member 2 according to the invention seen from above. A subjacent trailer 20 is indicated with a dotted line. The mounting member 2 comprises a circular tarpaulin 4 having a periphery 30. It can be seen that the diameter of the tarpaulin 4 is significantly larger than the length of the trailer. The radius of the tarpaulin 4 basically corresponds to the length of the trailer.

The mounting member 2 comprises five first assembly structures 6 formed as straps 6 that are attached to the periphery 30 by means of attachment members 24. On each of the five straps 6, a connection member 10 is moveably attached so that the connection member 10 can be displaced along the length of the strap like indicated by the axis X. Hereby, it is possible to adjust the position of the connection members 10 on the straps 6.

The mounting member 2 comprises five other assembly structures 6' formed as straps 6' attached to the periphery 30 by means of attachment members 24'. On each of the five straps 6', a connection member 10' is moveably attached so that the connection member 10' can be displaced along the length of the strap like indicated by the axis X as illustrated in Fig. 4 a). Hereby, it is possible to adjust the position of the connection members 10' on the straps 6'.

The mounting member 2 comprises a locking and tensioning strap 26' attached to the periphery 30 by means of an attachment member 24. A connection member 10' is attached to the distal end of the locking and tensioning strap 26', which is further provided with a length adjustment member 32 provided between the attachment member 24 and the connection member 10'.

In the opposite end of the mounting member 2, a strap 26 is attached. The strap 26 is attached to the periphery 30. A connection member 10 is attached to the distal end of the strap 26. The connection member 10 is configured to engage with a corresponding connection member 10' attached to the locking and tensioning strap 26'.

Fig. 4 b) illustrates another mounting member 2 according to the invention seen from above. A subjacent trailer 20 is indicated with a dotted line. The mounting member 2 comprises a circular tarpaulin 4 having a periphery 30. The mounting member 2 is formed like the one shown in Fig. 4 a) except that the mounting member 2 comprises four first assembly structures 6 and four other assembly structures 6' formed as straps attached to the periphery 30 by means of attachment members 24, 24'.

Likewise, the mounting member 2 shown in Fig. 4 a) comprises five first assembly structures 6 and five other assembly structures 6'. The mounting member 2 further comprises a shorter locking and tensioning strap 26' than the mounting member 2 shown in Fig. 4 a).

Fig. 5 a) illustrates a mounting member 2 according to the invention seen from above. A subjacent trailer 20 is indicated with a dotted line. The mounting member 2 comprises a circular tarpaulin 4 having a periphery 30. It can be seen that the diameter of the tarpaulin 4 is significantly larger than the length of the trailer. The radius of the tarpaulin 4 basically corresponds to the length of the trailer.

The mounting member 2 comprises four first assembly structures 6 formed as straps 6 that are provided with attachment members formed as snap hooks 40 attached to the proximal end of the straps 6. The snap hooks 40 are configured to detachably attach the straps 6 to corresponding rings 38 attached to (the periphery 30 of) the tarpaulin 4.

A length adjustment member 32 is provided on each of the four straps 6. The length adjustment members 32 allows for length adjustment and tensioning of the straps 6. A connection member 10 is attached to the distal end of each strap 6.

The mounting member 2 comprises four other assembly structures 6' shaped as straps 6'. Snap hooks 40 are provided in the proximal end of the straps 6'. The snap hooks 40 are configured to detachably attach the straps 6' to corresponding rings 38 attached to (the periphery 30 of) the tarpaulin 4.

On each of the four straps 6', a length adjustment member 32 is provided for length adjustment and/or tensioning of the straps 6'. In the end of each strap, a connection member 10' is provided. The connection member 10' is configured to engage with a connection member 10 from the corresponding first strap 6.

The mounting member 2 comprises a locking and tensioning strap 26' that is attached to the periphery 30 via a click lock. The click lock comprises a portion 10 attached to the tarpaulin 4 and a portion 10' attached to the locking and tensioning strap 26'. The locking and tensioning strap 26' further comprises a connection member 11' provided in the proximal end of the locking and tensioning strap 26'. The connection member 11' is configured to engage with a corresponding extension member 36 arranged in the proximal end of the connection member 11'. The extension member 36 is formed as a strap with the same structure as the locking and tensioning strap 26', and the extension member 36 comprises a connection member 11'.

In the opposite end of the mounting member 2, a strap 26 is provided. The strap 26 comprises a connection member 10' configured to engage with and hereby fix the strap 26 to a corresponding connection member 10 attached to the tarpaulin 4.

The strap 26 comprises a length adjustment member 32 for adjusting the length of the strap 26 and for tensioning the strap 26. The strap 26 further comprises a connection member 11 attached to the distal end of the strap 26 and configured to engage with the connection member 11" of the locking and tensioning strap 26'.

Fig. 5 b) illustrates another mounting member 2 according to the invention seen from above. A subjacent trailer 20 is indicated with a dotted line. The mounting member 2 comprises a circular tarpaulin 4 having a periphery 30. It can be seen that the diameter of the tarpaulin 4 is significantly larger than the length of the trailer. The radius of the tarpaulin 4 basically corresponds to the length of the trailer.

The mounting member 2 comprises four first assembly structures 6 formed as straps 6. The two outermost straps 6 comprise snap hooks 40 attached to the proximal end of the straps 6 for detachable attachment to the corresponding rings 38 attached to the periphery 30 of the tarpaulin 4. The two innermost straps are stitched to the periphery 30 of the tarpaulin 4.

On one of the four straps 6, a length adjustment member 32 is provided for adjusting the length of the strap 26 and for tensioning the straps 26. In the distal end of each strap 6, a connection member 10 is attached.

The mounting member 2 comprises four other assembly structures 6' shaped as straps 6'. The lowest strap 6' comprises snap hooks 40 provided in the proximal end of the straps 6'. The snap hooks 40 are configured to detachably attach the straps 6' to corresponding rings 38 attached to the periphery 30 of the tarpaulin 4.

The uppermost strap 6' comprises a connection member 10' arranged in the proximal end of the strap 6'. The connection member 10' is configured to be detachably attached to a corresponding connection member 10 which is attached to a ring 38 attached to the tarpaulin 4.

The uppermost strap 6' comprises a connection member 11' provided in the distal end of the strap 6'. The connection member 11' is adapted to engage with a corresponding connection member 10 on the corresponding strap 6. The two innermost straps are stitched to the periphery 30 of the tarpaulin 4. On each of the outermost straps 6', a length adjustment member 32 is provided. The length adjustment member 32 is adapted to adjust the length of the straps 6' and hereby tension the straps 6'.

In the distal end of the two innermost straps, a connection member is provided. The connection member is adapted to engage with a connection member 10 of the corresponding first strap 6.

The mounting member 2 comprises a locking and tensioning strap 26' that is stitched to the periphery 30 of the tarpaulin 4. The locking and tensioning strap 26' comprises a connection member 10' provided in the distal end of the locking and tensioning strap 26'. The locking and tensioning strap 26' further comprises a length adjustment member 32 configured to adjust the length of the straps 26' and hereby tension the straps 26'.

In the opposite end of the mounting member 2, a strap 26 is stitched to the tarpaulin 4. The strap 26 comprises a length adjustment member 32 for adjusting the length of the strap 26 and hereby tension the straps 26. The strap 26 further comprises a connection member 10 attached to the distal end of the strap 26. The connection member 10 is configured to engage with the connection member 10' on the locking and tensioning strap 26'.

Fig. 6 a) illustrates a mounting member 2 according to the invention. The mounting member 2 almost corresponds to the one shown in Fig. 5 a). The rings 38 and the two connection members 10 attached to the tarpaulin 4 are arranged more centrally on the mounting member 2 shown in Fig. 6 a). The rings 38 are mounted closer to the centre in a non-zero distance from the periphery 30.

Fig. 6 b) illustrates a mounting member 2 according to the invention. The mounting member 2 almost corresponds to the mounting member illustrated in Fig. 5 b). The tarpaulin 4 is, however, oval (not circular), and the rings 38 as well as the two connection members 10 attached to the tarpaulin 4 and the needlework (of the straps 6, 6') are placed more centrally on the mounting member 2 shown in Fig. 6 b). The rings 38 are mounted closer to the centre of the tarpaulin 4 in a non-zero distance from the periphery 30 of the tarpaulin 4.

Another difference between the mounting member 2 shown in Fig. 6 b) and in Fig. 5 b) is that the uppermost strap 6' in the left side comprises an extension member 6" configured to be detachably attached to the strap 6' by means of a click lock comprising a first portion 11' which is provided on the first strap 6' and another portion 11' which is provided on the other strap 6". A connection member 11" configured to engage with a corresponding connection member 11 is provided in the distal end of the other strap 6".

Fig. 7a) - Fig. 7 f) illustrate schematic illustrations of different embodiments of the tarpaulin 4 according to the invention. A subjacent trailer 20 is indicated with a dotted line.

Fig. 7 a) illustrates a circular tarpaulin 4. Fig. 7 b) illustrates a rectangular tarpaulin 4, in which one of the sides has been replaced with a circular arced side.

Fig. 7 c) illustrates an oval tarpaulin 4. Fig. 7 d) illustrates a hexagonal tarpaulin 4.

Fig. 7 e) illustrates a square tarpaulin 4 provided with round off corners. Fig. 7 f) illustrates an elongated rectangular tarpaulin 4.

Fig. 7 g) illustrates a mounting member 2 according to the invention seen from above. The mounting member 2 corresponds to the one shown in Fig. 5 b) except that four extra rings 38 and four attachment members 12 shaped as straps 12 are provided in the periphery of the tarpaulin 4. Each of the attachment members 12 comprises a snap hook 40 attached in the proximal end. The snap hooks 40 are configured to be detachably attached to the rings 38 and the attachment members 8, 8' shaped as straps.

The attachment members 12 are configured to be attached to a trailer (see Fig. 2 b), whereby the attachment members 8, 8' and the attachment members 12 allow the mounting member 2 to be easily secured to the trailer.

Fig. 7 h) illustrates a top view of another mounting member 2 according to the invention in a closed configuration. The mounting member 2 comprises four transversal attachment members each comprising two straps 6, 6' which are detachably attached to each other by means of corresponding members 10, 10' constituting a locking unit (e.g. a click lock as illustrated in Fig. 8 c). Each strap 6, 6' is provided with a length adjustment member 32 for adjusting the length of the straps 6, 6' and/or for tensioning the straps 6, 6'.

The mounting member 2 comprises a locking and tensioning strap 26' which is stitched to the tarpaulin 4. The locking and tensioning strap 26' comprises a connection member 10' attached to the distal end of the locking and tensioning strap 26'. The connection member 10' functions as a length adjustment member for length adjustment and/or tensioning of the locking and tensioning strap 26'.

The mounting member 2 comprises another strap 26 which is stitched to the opposite end of the tarpaulin 4. The other strap 26 comprises a connection member 10 attached to the distal end of the strap 26. The connection member 10 is configured to be detachably attached to the connection member 10' of the locking and tensioning strap 26'.

It can be seen that the distance d between the transversal attachment members is almost the same.

Fig. 8 a) illustrates how a mounting member 2 according to the invention is pulled tight by means of a transversal assembly structure (a strap) 26'. A person 44 is pulling the transversal assembly structure 26'. Hereby, the transversal assembly structure 26' is pulled tight. A length adjustment member 32 which connects the two straps (see reference number 26 and 26' in Fig. 4 a) is provided at the transversal assembly structure 26'.

It can be seen that the transversal assembly structures, each comprising two straps 6, 6', extend between different portions of the periphery of the tarpaulin 4. The straps 6, 6' are detachably attached to each other by means of corresponding connection members 10, 10' each constituting half of a click lock as the one illustrated in Fig. 8 c). The tarpaulin 4 is placed in a trailer 20 within the area surrounded by its side walls 18, 18'.

Fig. 8 b) illustrates how a mounting member 2 according to the invention is being emptied by means of a transversal assembly structure (a strap) 26'. A person 44 pulls the strap 26' that functions as locking strap, tensioning strap and emptying strap.

A pile of garden waste 22 is arranged in the mounting member 2. The garden waste 22 can be transported in a fast and easy manner, secured during transportation and emptied by means of the mounting member 2.

Subsequently, the trailer 20 is not required to be cleaned as the garden waste 22 is completely removed from the trailer 20 together with the mounting member 2 during the emptying process shown in Fig. 8 b).

In Fig. 8 b), the transversal assembly structures (straps) 26' as well as the length adjustment member 32 shown in Fig. 8 a) have been loosened. The person 44 pulls the strap 26' and hereby removes the mounting member 2 from the trailer 20.

Fig. 8 c) illustrates two connection members 10, 10' according to the invention. The two connection members 10, 10' are configured to engage with each other and hereby lock the connection members 10, 10' relative to each other.

The first connection member 10 comprises two locking members 42 which can be displaced towards the longitudinal axis Y of the connection member 10 when a radial inwardly directed force is applied. The first connection member 10 further comprises a first mounting aperture 46 and a second mounting aperture 48. The first mounting aperture 46 and the second mounting aperture 48 extend parallel and are configured to receive e.g. a strap or a webbing (not shown).

The other connection member 10' comprises a mounting aperture 50 configured to receive e.g. a webbing or a strap that has to be attached to e.g. a strap or a webbing which is attached to the first connection member 10.

The other connection member 10' comprises apertures 44 configured to engagingly receive the two locking members 42 when the first connection member 10 is inserted into the other connection member 10'.

### List of reference numerals

- 2: Mounting member
- 4: Tarpaulin
- 6, 6', 6": Assembly structure (rope, webbing, strap, wire)
- 8, 8': Strap
- 10, 10': Connection member
- 11, 11', 11": Connection member
- 12: Attachment member
- 14: Attachment member
- 16: Attachment member
- 16': Attachment member
- 18, 18': Trailer wall (side)
- 19: Bottom portion
- 20: Trailer
- 22: Item (e.g. waste)
- 24, 24: Attachment member
- 26, 26', 26": Assembly structure
- 28: Reinforcement member
- 30: Periphery
- 32: Length adjustment member
- 34: Opening
- 36: Extension member
- 38: Ring
- 40: Attachment member (e.g. a snap hook)
- 42: Locking member
- 44: Aperture
- 46, 48, 50: Mounting aperture
- d: Distance
- X: Axis
- Y: Axis

## Claims

1. A mounting member (2) preferably for trailers (20) and other objects that are configured to store and transport items (22), which mounting member (2) comprises a tarpaulin (4) manufactured in a material making it possible to completely or partly enclose a number of items (22) placed on the tarpaulin (4), wherein the mounting member (2) comprises a number of first assembly structures (6) and a number of other assembly structures (6'), wherein the mounting member (2) comprises means (24, 38, 10) for attachment of said first assembly structures (6) and said number of other assembly structures (6'), wherein the first assembly structures (6) comprise means (10) for detachable attachment to the other assembly structures (6'), **characterised in that** the mounting member (2) comprises at least one additional first assembly structure (26) and at least one additional second assembly structure (26'), wherein these additional assembly structures (26, 26') comprise means (10, 10', 11, 11') for attaching the at least one additional first assembly structure (26) to the at least one additional second assembly structure (26'), wherein the additional assembly structures (26, 26') extend basically perpendicular to the first assembly structures (6) and the other assembly structures (6'), when the assembly structures (6, 6', 26, 26') are attached to each other.

2. A mounting member (2) according to claim 1, **characterised in that** the at least one additional second assembly structure (26') has such a length and is attached to the tarpaulin (4) in a position that makes it possible to empty the mounting member (2) by pulling the additional second assembly structure (26').

3. A mounting member (2) according to claim 1 or 2, **characterised in that** the mounting member (2) comprises at least three first assembly structures (6) and at least three other assembly structures (6'), and that the assembly structures (6, 6') are configured to extend basically perpendicular to the longitudinal axis of a trailer (20), when the mounting member (2) is arranged in a trailer (20).

4. A mounting member (2) according to one of the preceding claims, **characterised in that** the mounting member (2) comprises mounting straps (8, 8') for attachment to a transport object (20).

5. A mounting member (2) according to one of the preceding claims, **characterised in that** the tarpaulin (4) and the assembly structures (6, 6', 26, 26') comprise means (40, 38) for detachable attachment of the assembly structures (6, 6', 26, 26') on the tarpaulin (4).

6. A mounting member (2) according to one of the preceding claims, **characterised in that** the assembly structures (6, 6', 26, 26') comprise one or more extension members (6") configured to be detachably attached to one or more of the assembly structures (6, 6', 26, 26').

7. A mounting member (2) according to one of the preceding claims, **characterised in that** one or more of the assembly structures (6, 6', 26, 26') comprise a length adjustment member (32) for length adjustment and/or tensioning of the assembly structures (6, 6', 26, 26').

8. A mounting member (2) according to one of the preceding claims, **characterised in that** the means (24, 38, 10) for attachment of a number of first assembly structures (6) and a number of other assembly structures (6') to the tarpaulin (4) are provided in a distance from the periphery (30) of the mounting member (2), wherein this distance is preferably larger than 10 cm, wherein it is preferred that the distance is larger than 20 cm.

9. A mounting member (2) according to one of the preceding claims, **characterised in that** the tarpaulin (4) is water-permeable.

## Patentansprüche

1. Montageelement (2), vorzugsweise für Anhänger (20) und andere Gegenstände, die konfiguriert sind, um Gegenstände (22) zu lagern und zu transportieren, welches Montageelement (2) eine Abdeckplane (4) umfasst, die aus einem Material hergestellt ist, das es ermöglicht, eine Anzahl von Gegenständen (22), die auf der Abdeckplane (4) angeordnet sind, vollständig oder teilweise zu umschließen, wobei das Montageelement (2) eine Anzahl von ersten Baugruppenstrukturen (6) und eine Anzahl von anderen Baugruppenstrukturen (6') aufweist, wobei das Montageelement (2) Mittel (24, 38, 10) zum Befestigen der ersten Baugruppenstrukturen (6) und der Anzahl anderer Baugruppenstrukturen (6') umfasst, wobei die ersten Baugruppenstrukturen (6) Mittel (10) zur lösbaren Befestigung an die anderen Baugruppenstrukturen (6') umfassen, **dadurch gekennzeichnet, dass**
das Montageelement (2) mindestens eine zusätzliche erste Baugruppenstruktur (26) und mindestens eine zusätzliche zweite Baugruppenstruktur (26') umfasst, wobei diese zusätzlichen Baugruppenstrukturen (26, 26') Mittel (10, 10', 11, 11') umfassen, um die mindestens eine zusätzliche erste Baugruppenstruktur (26) an der mindestens einen zusätzlichen zweiten Baugruppenstruktur (26') zu befestigen, wobei sich die zusätzlichen Baugruppenstrukturen (26, 26') im Wesentlichen senkrecht zu den ersten Baugruppenstrukturen (6) und den anderen Baugruppenstrukturen (6') erstrecken, wenn die Baugruppenstrukturen (6, 6', 26, 26') aneinander befestigt sind.

2. Montageelement (2) nach Anspruch 1, **dadurch gekennzeichnet, dass** die mindestens eine zusätzliche zweite Baugruppenstruktur (26') eine solche Länge aufweist und an der Abdeckplane (4) in einer Position angebracht ist, die es ermöglicht, das Montageelement (2) durch Ziehen der zusätzlichen zweiten Baugruppenstruktur (26') zu entleeren.

3. Montageelement (2) nach Anspruch 1 oder 2, **dadurch gekennzeichnet, dass** das Montageelement (2) mindestens drei erste Baugruppenstrukturen (6) und mindestens drei andere Baugruppenstrukturen (6') umfasst und dass die Baugruppenstrukturen (6, 6') konfiguriert sind, um sich im Wesentlichen senkrecht zur Längsachse eines Anhängers (20) zu erstrecken, wenn das Montageelement (2) in einem Anhänger (20) angeordnet ist.

4. Montageelement (2) nach einem der vorhergehenden Ansprüche, **dadurch gekennzeichnet, dass** das Montageelement (2) Montagebänder (8, 8') zur Befestigung an einem Transportgegenstand (20) aufweist.

5. Montageelement (2) nach einem der vorhergehenden Ansprüche, **dadurch gekennzeichnet, dass** die Abdeckplane (4) und die Baugruppenstrukturen (6, 6', 26, 26') Mittel (40, 38) zur lösbaren Befestigung der Baugruppenstrukturen (6, 6', 26, 26') auf der Abdeckplane (4) umfassen.

6. Montageelement (2) nach einem der vorhergehenden Ansprüche, **dadurch gekennzeichnet, dass** die Baugruppenstrukturen (6, 6', 26, 26') ein oder mehrere Verlängerungselemente (6") umfassen, die konfiguriert sind, um lösbar an eine oder mehrere der Baugruppenstrukturen (6, 6', 26, 26') befestigt zu werden.

7. Montageelement (2) nach einem der vorhergehenden Ansprüche, **dadurch gekennzeichnet, dass** eine oder mehrere der Baugruppenstrukturen (6, 6', 26, 26') ein Längenanpassungselement (32) zur Längenanpassung und/oder zum Spannen der Baugruppenstrukturen (6, 6', 26, 26') umfassen.

8. Montageelement (2) nach einem der vorhergehenden Ansprüche, **dadurch gekennzeichnet, dass** die Mittel (24, 38, 10) zur Befestigung einer Anzahl erster Baugruppenstrukturen (6) und einer Anzahl anderer Baugruppenstrukturen (6') an die Abdeckplane (4) mit einem Abstand vom Umfang (30) des Montageelements (2) bereitgestellt sind, wobei dieser Abstand vorzugsweise größer als 10 cm ist, wobei es bevorzugt ist, dass der Abstand größer als 20 cm ist.

9. Montageelement (2) nach einem der vorhergehenden Ansprüche, **dadurch gekennzeichnet, dass** die Abdeckplane (4) wasserdurchlässig ist.

## Revendications

1. Elément de montage (2) de préférence pour remorques (20) et autres objets configurés pour stocker et transporter des articles (22), lequel élément de montage (2) comprend une bâche (4) fabriquée dans un matériau permettant un enfermement complet ou partiel d'un certain nombre d'articles (22) placés sur la bâche (4), l'élément de montage (2) comprenant un certain nombre de premières structures d'assemblage (6) et un certain nombre d'autres structures d'assemblage (6'), dans lequel l'élément de montage (2) comprend des moyens (24, 38, 10) pour la fixation desdites premières structures d'assemblage (6) et dudit nombre d'autres structures d'assemblage (6'), les premières structures d'assemblage (6) comprenant des moyens (10) pour une fixation détachable aux autres structures d'assemblage (6'), **caractérisé en ce que** l'élément de montage (2) comprend au moins une première structure d'assemblage supplémentaire (26) et au moins une deuxième structure d'assemblage supplémentaire (26'), ces structures d'assemblage supplémentaires (26 , 26') comprennent des moyens (10, 10', 11, 11') pour attacher au moins une première structure d'assemblage supplémentaire (26) à au moins une deuxième structure d'assemblage supplémentaire (26'), les structures d'assemblage supplémentaires (26, 26') s'étendant essentiellement perpendiculairement aux premières structures d'assemblage (6) et d'autres structures d'assemblage (6'), lorsque les structures d'assemblage (6, 6', 26, 26') sont attachées les unes aux autres.

2. Elément de montage (2) selon la revendication 1, **caractérisé en ce qu'**au moins une deuxième structure d'assemblage supplémentaire (26') a une telle longueur et est fixée à la bâche (4) dans une position permettant de vider l'élément de montage (2) en tirant sur la deuxième structure d'assemblage supplémentaire (26').

3. Elément de montage (2) selon la revendication 1 ou 2, **caractérisé en ce que** l'élément de montage (2) comprend au moins trois premières structures d'assemblage (6) et au moins trois autres structures d'assemblage (6'), et **en ce que** les structures d'assemblage (6, 6') sont configurés pour s'étendre essentiellement perpendiculairement à l'axe longitudinal d'une remorque (20), lorsque l'élément de montage (2) est agencé dans une remorque (20).

4. Elément de montage (2) selon l'une des revendications précédentes, **caractérisé en ce que** l'élément de montage (2) comprend des pattes de montage (8, 8') destinées à être fixées à un objet de transport (20).

5. Elément de montage (2) selon l'une des revendications précédentes, **caractérisé en ce que** la bâche (4) et les structures d'assemblage (6, 6', 26, 26') comprennent des moyens (40, 38) de fixation détachable des structures d'assemblage (6, 6', 26, 26') sur la bâche (4).

6. Elément de montage (2) selon l'une des revendications précédentes, **caractérisé en ce que** les structures d'assemblage (6, 6', 26, 26') comprennent un ou plusieurs éléments d'extension (6") configurés pour être attachés de manière détachable à une ou plusieurs des structures d'assemblage (6, 6', 26, 26').

7. Elément de montage (2) selon l'une des revendications précédentes, **caractérisé en ce qu'**une ou plusieurs des structures d'assemblage (6, 6', 26, 26') comprennent un élément de réglage de longueur (32) pour le réglage de longueur et / ou mise en tension des structures d'assemblage (6, 6', 26, 26').

8. Elément de montage (2) selon l'une des revendications précédentes, **caractérisé en ce que** les moyens (24, 38, 10) pour la fixation d'un certain nombre de premières structures d'assemblage (6) et d'un certain nombre d'autres structures d'assemblage (6') à la bâche (4) sont prévus à une distance de la périphérie (30) de l'élément de montage (2), cette distance étant de préférence supérieure à 10 cm, il est préférable que la distance soit supérieure à 20 cm.

9. Elément de montage (2) selon l'une des revendications précédentes, **caractérisé en ce que** la bâche (4) est perméable à l'eau.
